# EUROPEAN PATENT APPLICATION

(11) **EP 0 546 234 A1**
(43) Date of publication of application: **16.06.1993**
(21) Application number: 91850313.7
(22) Date of filing: 12.12.1991
(51) Int. Cl.: B29C 45/27, B29C 45/14

(54) **An arrangement in moulding tools intended for the injection moulding of a container while simultaneously affixing a label or the like thereto**

(71) Applicant: AB CERBO, S-461 29 Trollhättan (SE)
(72) Inventor: Gladys, Rudolf, S-461 57 Trollhättan (SE)
(74) Representative: Westerlund, Christer John Axel (SE)

(57) **Abstract**

When injection moulding thin-walled products at high moulding pressures, high injection rates and rapid tool movements, it is important to constantly achieve correct injection and reliability in the separation of a moulded product from the mould, in a manner which will guarantee that no rest products are formed when separating the product. The possible formation of rest products is liable to disturb the following injection of moulding material, so as to prevent correct positioning of an inserted label, or so as to cause a rest product, such as a filament or thread, to become embodied in the container next moulded.

In order to achieve efficient separation of the moulded product, the opening (18) provided in the mould half (2) (the die) through which moulding material is injected is formed in a manner to obtain a smallest through-flow area between the cold, outer zone and the hot, inner zone, immediately inwardly of the opening, by making the opening (18) circular-cylindrical in shape and by placing in said opening (18) a conical device (19) with the apex of the device in line with the outer plane of the opening.

## Description

### Technical Field

The present invention relates to an arrangement in moulding tools intended for the injection moulding of a container, such as a can or the like, from, e.g., thermoplastic material while simultaneously embodying a label, a foil piece or the like, in the container or affixing a label thereto, wherein the label is inserted between a pair of mould halves (mould plunger and mould die), when the mould is open and embodied in or affixed to the moulded container when the mould is closed.

### Background Art

The affixation of a foil sheet to or the embodiment of a foil sheet in a container which serves as a packaging unit can function to alleviate one of the most serious drawbacks of using the cheapest available thermoplastic materials, such as styrene and olefin plastics, namely the permeability of such plastics to gases, flavourants and water vapour. This drawback has greatly limited the use of these materials as packaging materials, for example for packaging foodstuffs, chemical-technical products and cosmetics. The influence exerted by the packaged product on the plastic packaging material has also made it necessary in several cases to use packaging materials other than the aforesaid packaging materials. Cans which are injection moulded from thermoplastic materials are also normally provided with decorations in one or more colours. These decorations may, for instance, be provided through the medium of labels or decalcomania. A foil sheet which is embodied in or affixed to a moulded article during the injection moulding process is also able to function as a decoration or as a label.

The expedient of applying print to a thin foil sheet consisting of the same plastic material as that from which the can is manufactured and of placing this printed foil sheet in liquid mould prior to injecting the plastic material thereinto has long been known to the art. The foil then bonds firmly to the plastic material and thus forms a part of the manufactured container or can. It is also known to use a foil laminate instead of a single sheet of plastic foil, this laminate consisting of paper which is coated with plastic that will fuse firmly to the plastic material injected into the mould. The advantage with these methods is that there is obtained a decorative device which is seated firmly on the moulded product and which can be produced in large series at relatively low costs, since the foil sheet can be offset printed at high production rates. The methods, however, are encumbered with the disadvantage that the task of placing into the moulds a foil which has been cut to shape or punched out has extended the production time, such that the working cycle takes longer to complete than a working cycle which does not include the insertion of a decorative label or foil sheet. The cost of the single sheet plastic foil or of the laminate is, of course, higher than the cost of standard paper. It has also been proposed to take a decorated plastic foil web from a storage reel and feed said web through a web heating device and in between the mould halves of an injection moulding machine, thereby enabling pieces of the heated foil web to be taken-out and formed between the mould tools prior to injecting plastic material into the mould and fusing the foil material with said plastic material. This method provides necessarily a fully covering foil, while the steps of softening and shaping the foil place relatively narrow restrictions on the choice of foil material used.

### Disclosure of the Invention

When injection moulding products at high moulding pressures, high injection rates and using thin-bodied moulding materials and rapid tool movements, it is important that the material is injected correctly into the mould and that the moulded product can be separated cleanly and reliably from the mould so as that no rest products are formed as a result of the separation. Any rest products that form are liable to have a disturbing influence on the liquid moulding material subsequently injected into the mould, such as to prevent an inserted label from being positioned correctly Furthermore, such rest products, e.g. filaments or threads of moulding material, may become embodied in the next container that ismoulded. In the rational handling of moulded containers, the containers are stacked after leaving the mould and packeted. The continued use of such containers will often involve the introduction of said containers into an automatic container-filling system, in which the containers are filled with their intended contents in a rapid sequence. No actual check as to the cleanliness of the containers is made, and indeed should not be necessary. Any rest product will first be discovered by the user, which is not satisfactory and also unacceptable.

In order to achieve efficient separation of the moulded article, the opening in the mould half, i.e. the die, through which moulding material is injected into the mould is formed in a manner to create a smallest through-flow area between the cold, outer zone and the hot, inner zone of the mould half immediately in front of said opening, by making the opening circular-cylindrical in shape and placing therein a cone with the apex of the cone in line with the outer plane of the opening. An opening of this configuration in coaction with the cone apex will provide reliable and efficient separation of the moulded product. The present invention enables a pre-sized, non-softened but relatively rigid foil piece to be embodied in or affixed to the container. This foil piece may be made of any appropriate material, and the choice of material used is only governed, to a large extent, by the properties desired of the foil with respect to its sealability, printing process applicability, etc. It is assumed, in this regard, that the introduction of the foil pieces into the injection moulding machine will not encroach on the production rate thereof.

### Brief Description of the Drawings

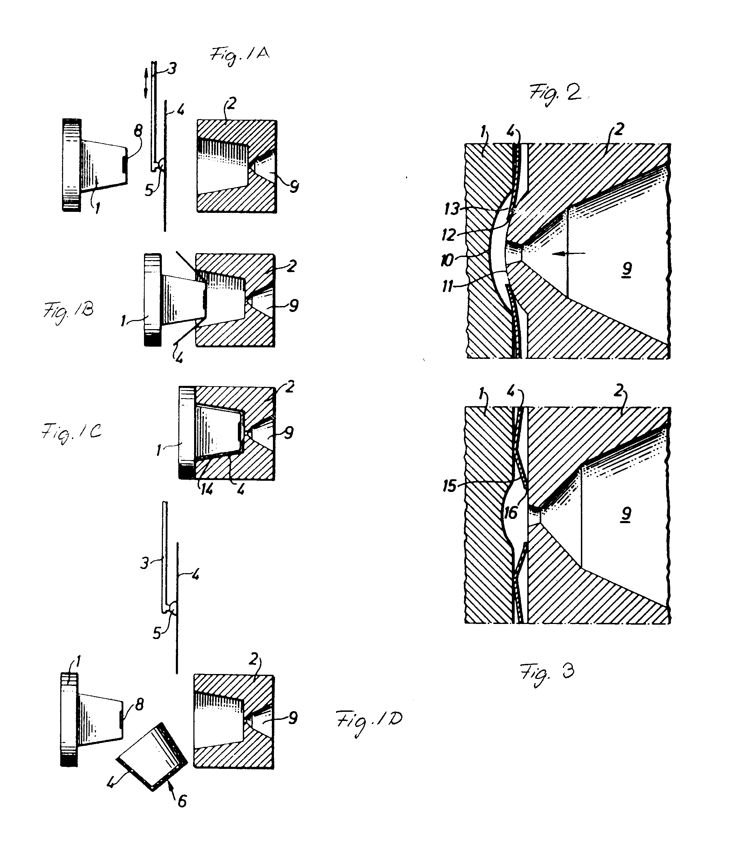

Figure 1 a is a partly cut-away side view of the open mould tool of an injection moulding machine according to known technique, and shows the machine immediately subsequent to having ejected a moulded container and with a foil piece having just been inserted between the mould halves of the tool;
Figure 1 illustrates correspondingly to Figure 1 a the same mould halves in a later manufacturing stage at which the mould is about to be closed;
Figure 1 shows the mould when closed; moulded container and the insertion of a fresh foil piece;
Figures 2 and 3 are longitudinal sectional views of alternative embodiments and illustrate alternative constructions of the die injection nozzle and a corresponding part of the mould plunger for injecting plastic material through a hole in a label or foil piece when positioned in accordance with Figure 1 c;
Figure 4 is a cross-sectional view of an inventive mould tool; and
Figure 5 illustrates in detail the configuration of the opening in the inventive mould tool.

### Best Mode of Carrying Out the Invention

The open mould illustrated schematically in Figure 1 consists of two mould halves 1 in the form of a plunger 1 and a die 2. Figure 1 a also illustrates an insertion device 3 which functions to insert foil pieces 4, serving as labels, into the mould. This device consists of, e.g., two mutually parallel tubes which are mounted for vertical movement between the mould halves and which are provided at the bottoms thereof with suction pads or perforated plates 5 which hold one label at a time by suction. The labels are stacked in a magazine (not shown) either horizontally or on edge. The insertion device 3 is brought close to the magazine and removes a single label 4 therefrom by suction, and is then moved down to a position of readiness above the mould (see Figure 1 d). The labels and the moulded container may have different shapes.

When a newly moulded container 6 (Figure 1 d) has just left the mould, the mould is again closed by moving the plunger 1 to the right. At the same time, or slightly earlier, the insertion device 3 is caused to move downwards with a label 4 secured thereto. The label reaches a position in which it is level with the two mould halves 1, 2 before the plunger 1 reaches the label (Figure 1 a). Arranged on the free end surface of the plunger are a number of slots or openings 8 through which a vacuum suction effect can be exerted on respective labels. When the plunger 1 has reached the label, the label is sucked firmly to the free end surface of the plunger and held in a fixed position. When the label is moved into the die 2 by means of the plunger, the suction device 5 on the insertion device 3 releases the label. The mould halves are then brought together (Figures 1 b, 1c) with the label 4 located in the interspace between said mould halves. The label is then guided by the plastic material injected into the mould, so as to be placed on the correct, intended side of the container wall. When the centre of the label is imperforate, the material injected into the mould will press the label firmly onto the inner surface. As the liquid moulding material is injected into the mould and the moulded object cools therein, the insertion device 3 returns to the magazine and removes a further label 4 therefrom by suction, this label being intended for the following working sequence.

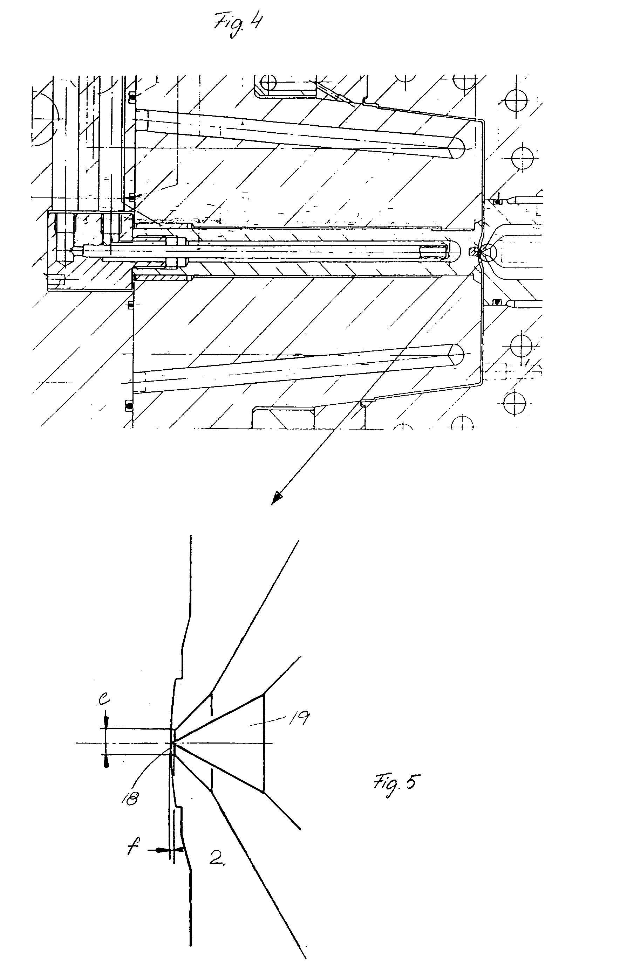

The label may be guided to the outer surface by means of any one of a number of methods. Figure 2 illustrates on a larger scale those parts of the plunger 1 and the die 2 located adjacent the injection nozzle 9 through which moulding material is injected into the die. The label 4 is flat and has a hole which is located centrally opposite the nozzle orifice. The respective mould halves have curved parts 10 and 11 which are curved in mutually the same direction at the centre around the nozzle orifice, causing the hole-defining edge 12 of the label to be pressed against the convex part 11 in the centre of the die. When the molten plastic material is injected into the mould through the nozzle opening, the flow of material will crowd into the space 13 beyond the hole-defining edge 12 and press the label 4 against the die, such as to position the label on the outside of the can. The plastic material then continues to press the label against the whole of the die wall, until the mould cavity 14 is filled.

The temperature of the two mould halves 1 and 2 is controlled by circulating liquid through channels formed in said halves, usually a coolant which is effective in maintaining a relatively cool mould. If the molten material is left in contact with the label over an extended period, the label will be damaged. Because of the rapid injection process and the high injection pressure employed, however, the label is pressed quickly and firmly against the mould wall and there cooled very quickly to a temperature which prevents damage to the label from heat from the plastic material.

Figure 3 illustrates an embodiment in which both mould halves 1, 2 are substantially flat at the centres thereof, but where the label 4 is instead curved, at 14, into a conical shape at the mould centre. In this case, the hole-defining edge 16 in the label abuts the die 2 in a manner to guide the flow of plastic material along the path intended, i.e. so that the label will be affixed to the outer surface of the can.

Figure 4 is a cross-sectional view which illustrates a practical example of the manner in which a die plunger 1 and a die 2 are disposed in a moulding position. Figure 5 is an enlarged view, scale 5:1, illustrating the configuration of the opening 18 in the die 2. The opening is circular-cylindrical in shape and may have a diameter of 1.2 mm (e) and a depth of 0.1 mm (f). A needle 19 projects into the opening with the conical point of the needle lying on the end-plane of that side of the opening which faces the area between the mould halves. The temperature of the area around the opening is lower than the temperature of the area inwardly of said opening, due to cooling. The combination of the circular-cylindrical opening and the conical needle point provides a smallest through-flow cross-section inwardly of the end-plane of said opening at the inner end-plane of the circular-cylindrical opening, which has been found advantageous in separating the moulded product. Upon completion of an injection moulding process, the casting or moulding string will be drawn in the circular-cylindrical section when the moulded container is ejected from the mould, without forming a filament or thread, or without forming any kind of thickening, due to the provision of the smallest through-flow cross-section with a simultaneous cold outer side and hot inner side.

Because of the presence of the smallest through-flow cross-section, which is subjected simultaneously to relatively large temperature differences, the casting or moulding string is the weakest point and results in the aforesaid reliable separation of the moulded article without forming rest products. If separation of an injection moulded product is directed to the weakest point of the moulding process, only a small amount of energy is consumed while, at the same time, resulting in a small separation surface with small risk of rest products forming. The formation of rest products, however, in the form of filaments, threads or thickenings will always be liable to disturb and prevent correct embodiment of a label in or the affixation of a label to the moulded article.

The example above has been described with reference to the use of labels. It is possible, in this respect, to use standard paper of conventional quality printed with a decorative device and punched or cut to a size appropriate to the container being manufactured. Because the label is inserted between the mould halves at the same time as the previously moulded article is ejected from the mould, no time is wasted in the manufacturing cycle. As a result of the high pressure at which the molten plastic material is injected and as a result of the heat given-off by said material, about 200 to 300 _{°} C, the label will be fastened to the container very securely and is safeguarded against heat damage through said cooling of the mould tool.

However, an advantage is afforded when a foil piece is arranged as a diffusion blocker in accordance with the invention. In a manner similar to that described above, a foil piece which is punched or clipped to size after being inserted into the mould can be well-adapted to the bottom and the outer surface of the can and formed so as to cover the inner surface or outer surface of the can more or less completely. By using an appropriate foil material which is resistant to the substance to be packaged or is only slightly permeable or completely impermeable to gases, flavourants or water vapour, there is obtained a packaging means which will fulfil all reasonable requirements and which has a plastic supporting part and a sealing inner or outer part made of foil material. The foil material may comprise one or several layers of different materials, for example aluminium, plastic and/or paper. The foil pieces may be configured so that they will fit packaging means having a round or cornered shape.

It will be understood that the lids of said containers may be provided with foil in a corresponding manner. It is also conceivable to print a decoration on the foil pieces, so that the foil pieces will serve both as a label and as a permeability blocker. The foil piece may be placed on the inside of a transparent plastic container printed with decoration on the outer surface thereof, so as to be visible through the walls of said container.

The foil pieces intended for containers may also be provided with decorative elements on flaps which when brought together in a mould form a continuous decoration. It is also possible to transfer the decoration on the flat foil with a precision which lacks correspondence when moulding heat-softened foil delivered to the mould in web form.

## Claims

1. An arrangement in a mould tool for the injection moulding of a container, such as a can or the like, made of a thermoplastic material for instance, while simultaneously embodying a label, a foil piece or the like in said container or affixing a label, foil piece or the like thereto, wherein the label is inserted between two mould halves, a die plunger and a die, when the mould is open and the label then embodied in or affixed to the moulded product when the mould is closed, characterized in that an opening (18) in the mould half (2) through which moulding material is injected into the mould has been formed with a smallest through-flow area inwardly of the end-plane of the opening towards the area between the two mould halves.

2. An arrangement according to Claim 1, characterized in that the opening is circular-cylindrical in shape and surrounds a conically pointed device (19).

3. An arrangement according to Claim 2, characterized in that the opening (18) has a preferred diameter of 1.20 mm and a preferred depth of 0.10 mm.
